# EUROPEAN PATENT APPLICATION

(11) **EP 3 677 513 A1**
(43) Date of publication of application: **08.07.2020**
(21) Application number: 19219709.3
(22) Date of filing: 24.12.2019
(51) Int. Cl.: B64D 43/02, B64D 45/00, G05D 1/00

(54) **AIRCRAFT AIRSPEED SYSTEM AND METHOD OF CROSS CHECKING AIRSPEED**

(30) Priority: 07.01.2019 GB 201900195
(71) Applicant: GE Aviation Systems Limited, Bishops Cleeve Cheltenham Gloucestershire GL52 8SF (GB)
(72) Inventor: SCHWINDT, Stefan Alexander, Cheltenham, Gloucestershire GL52 8SF (GB)
(74) Representative: Openshaw & Co.

(57) **Abstract**

An apparatus and method (200) for establishing air data. An aircraft (10) progresses (202) while a processing module (50) receives (204) speed data from at least one sensor (22, 22b). The processing module (50) can determine (206) an actual airspeed of the aircraft (10) based on the speed data. The processing model (50) can also receive sensed (208) real-time airspeed data for comparison (210) to the actual airspeed. The comparison (210) can automatically initiate a countermeasure (212).

## Description

### TECHNICAL FIELD

The disclosure relates to an aircraft, a method of comparing sensed air speed to actual air speed, and a method of operating an aircraft based thereon.

### BACKGROUND

Contemporary aircraft include a variety of systems to assist in flying the aircraft. Systems can include one or more components to determine air data. Air data can be used to determine the actual speed of the aircraft. The availability of proper air data is an important aspect in aircraft operation.

### BRIEF DESCRIPTION

In one aspect, the present disclosure relates to a method of establishing air data, the method including progressing an aircraft along a runway, receiving speed data related to at least one wheel of at least one landing gear assembly as the aircraft is progressing, determining actual airspeed of the aircraft based on at least the speed data, sensing real-time airspeed data from a set of airspeed sensors as the aircraft is progressing, comparing the actual airspeed to real-time airspeed data, and at least one of automatically rejecting takeoff or automatically providing an indication to a pilot of the aircraft when the comparing satisfies a predetermined threshold.

In another aspect, the present disclosure relates to a method of operating an aircraft, the method including progressing an aircraft along a runway, sensing real-time airspeed data from a set of airspeed sensors as the aircraft is progressing, determining actual airspeed, comparing the actual airspeed to real-time airspeed data, and automatically initiating a countermeasure, with at least one system onboard the aircraft, when the comparing satisfies a predetermined threshold.

In another aspect, the present disclosure relates to an aircraft, including a set of airspeed sensors, at least one sensor other than an airspeed sensor operably coupled to at least one component or system of the aircraft, a countermeasure module operably coupled to at least one of a flight management system or display within the aircraft, and a processing module operably coupled to the set of airspeed sensors and the at least one sensor the processing module configured to receive information from the set of airspeed sensors and the at least one sensor as the aircraft is progressing along a runway, the processing module configured to determine an actual airspeed of the aircraft based on the received information from the at least one sensor and configured to compare the actual airspeed to the received information from the set of airspeed sensors, when the comparing satisfies a predetermined threshold the processing module is configured to provide an output to the countermeasure module.

### BRIEF DESCRIPTION OF THE DRAWINGS

In the drawings:
FIG. 1 is a schematic illustration of an aircraft according to aspects of the present disclosure as described herein.
FIG. 2 is a schematic illustration of a portion of the aircraft from FIG. 1.
FIG. 3 is a perspective view of a portion of a cockpit of the aircraft from FIG. 1.
FIG. 4 is a schematic illustration of collected information communication within the aircraft of FIG. 1.
FIG. 5 is a flow chart diagram illustrating a method of establishing air data that can be carried out at least in part by the aircraft of FIG. 1 or FIG. 2.

### DETAILED DESCRIPTION

Contemporary aircraft include systems that use air data to help operate the aircraft. Traditionally, to ensure the availability of air data aircraft often include the use of one or more air data sensors. The quality of the air data can be evaluated while the aircraft is in flight using a global positioning system (GPS) or inertial reference system (IRS) combined with other information such as flight plan data or altitude.

Aspects of the present disclosure speak to an aircraft and a method of establishing air data for the aircraft. The aircraft includes a set of airspeed sensors and at least one sensor other than an airspeed sensor. Output from the set of airspeed sensors and the at least one sensor other than an airspeed sensor can be collected as the aircraft progresses, for example, down a runway for takeoff. The data from the set of airspeed sensors and the at least one sensor other than an airspeed sensor can be used to develop comparative data using a processing module, wherein the processing module can provide an output to a countermeasure module. The countermeasure module can provide an indication of the comparison or an automatic countermeasure. The automatic countermeasure can include the automatic rejection of aircraft takeoff.

As used herein, "a set" can include any number of the respectively described elements, including only one element. All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of the disclosure. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order, and relative sizes reflected in the drawings attached hereto can vary.

As used herein, a "system" or a "controller module" can include at least one processor and memory. Non-limiting examples of the memory can include Random Access Memory (RAM), Read-Only Memory (ROM), flash memory, or one or more different types of portable electronic memory, such as discs, DVDs, CD-ROMs, etc., or any suitable combination of these types of memory. The processor can be configured to run any suitable programs or executable instructions designed to carry out various methods, functionality, processing tasks, calculations, or the like, to enable or achieve the technical operations or operations described herein. The program can include a computer program product that can include machine-readable media for carrying or having machine-executable instructions or data structures stored thereon. Such machine-readable media can be any available media, which can be accessed by a general purpose or special purpose computer or other machine with a processor. Generally, such a computer program can include routines, programs, objects, components, data structures, algorithms, etc., that have the technical effect of performing particular tasks or implement particular abstract data types.

In another non-limiting example, a processing module can include comparing a first value with a second value, and operating or controlling operations of additional components based on the satisfying of that comparison. For example, when a sensed, measured, or provided value is compared with another value, including a stored or predetermined value, the satisfaction of that comparison can result in actions, functions, or operations controllable by the processing module or modules in communication with the processing module. As used, the term "satisfies" or "satisfaction" of the comparison is used herein to mean that the first value satisfies the second value, such as being equal to or less than the second value, or being within the value range of the second value. It will be understood that such a determination can easily be altered to be satisfied by a positive/negative comparison or a true/false comparison. Example comparisons can include comparing a sensed or measured value to a threshold value or threshold value range. Another non-limiting example can be the comparison of two values calculated from data obtained by at least two different sensors.

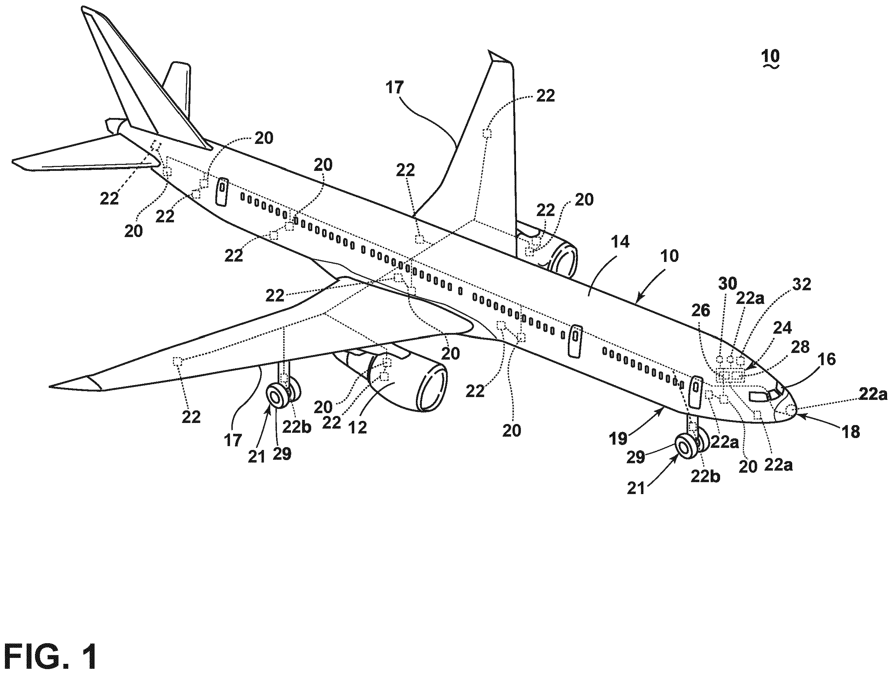

FIG. 1 schematically depicts an aircraft 10 having one or more propulsion engines 12 coupled to a fuselage 14. A cockpit 16 can be positioned in the fuselage 14 and wing assemblies 17 can extend outward from the fuselage 14. The fuselage 14 can further include a nose 18 and a lower portion 19.

While a commercial aircraft has been illustrated, it is contemplated that the aircraft 10 can be any type of aircraft, for example, without limitation, fixed-wing, rotating-wing, rocket, personal aircraft, flying taxis, unmanned aircraft, and military aircraft. Further, while two propulsion engines 12 have been illustrated as gas turbine propulsion engines 12 and have been illustrated on the wing assemblies 17, it will be understood that any number or type of propulsion engines 12 have been contemplated and can be located in any suitable position.

At least one system 20, which can aid in enabling proper operation of the aircraft 10 can be included in the aircraft 10. It will be understood that the system(s) 20 can be located within the fuselage 14, wing assemblies 17, or any other suitable portion of the aircraft 10. The system(s) 20 can include but are not limited to: an electrical system, an oxygen system, hydraulics and/or pneumatics system, a fuel system, a propulsion system, navigation systems, flight controls, audio/video systems, an Integrated Vehicle Health Management (IVHM) system, and systems and components associated with the mechanical structure of the aircraft 10 including flaps. A variety of aircraft system(s) have been illustrated for exemplary purposes and it will be understood that they are only a few of the systems and components that can be included in the aircraft 10.

At least one component 22 can be operably coupled to the at least one system 20. The component(s) 22 can be, but are not limited to one or more of a temperature sensor, a humidity sensor, a vibration sensor, an accelerometer, a pressure sensor, a sonic or acoustic sensor, an optical sensor, a magnetic or electric field detector, a structural strain detector, an environmental sensor, a control system detector, a fuselage structure detector, a wing structure detector, an engine monitor, an altimeter, a rotational speed sensor, or a landing gear monitor. In this manner, a sensor can receive an input and provide an output related to, in non-limiting examples, temperature, altitude, pressure, magnetic fields, electric fields, humidity, vibration, speed, acoustical waves, or environmental measurements. It is further contemplated that the component(s) 22 can include actuators. The actuator can provide an output signal related to a position or state of a portion of the actuator. The output can be related to the portion of the actuator being open, closed, partially open, on, off, contacting, not contacting, partially contacting, or any other known output signal provided by actuators. Further still, while one component 22 has been illustrated as being associated with each system 20 it will be understood that multiple components 22 can be associated with each system 20.

By way of non-limiting example, a set of airspeed sensors 22a can be located on the fuselage 14, the cockpit 16, the nose 18, or the lower portion 19 of the aircraft 10. While illustrated primarily near the nose 18, the lower portion 19, or cockpit 16, it is contemplated that the set of airspeed sensors 22a can be located anywhere on the aircraft. It will be understood that the any of the set of airspeed sensors 22a can be located at any of the locations. For example, one or more of the set of airspeed sensors 22a can be located at one, all, or any combination of locations. The set of airspeed sensors 22a can include, but are not limited to, a pitot tube, a static port, a pitot-static tubes, a multi-function probe, or a combination thereof. It is further contemplated that the set of airspeed sensors 22a can be connected as part of an airspeed system 20a, which can form another exemplary system 20.

Further still, a wheel speed sensor 22b can be located on a portion of at least one landing gear assembly 21. It is contemplated that the wheel speed sensor 22b can provide speed data related to rotation, movement, or other motion of at least one wheel 29 of the at least one landing gear assembly 21. The wheel speed sensor 22b can be an optical sensor, rotational sensor, acoustical sensor, or any sensor or combination of sensors capable of providing speed data related to the at least one wheel 29 of the for the aircraft 10.

One or more computers or controllers 24 can also form one of the system(s) 20 or component(s) 22. While only a single controller 24 has been illustrated, it is contemplated that any number of controllers 24 can be included in the aircraft 10. In such an instance, the controller 24 can also be connected with other controllers of the aircraft 10. The controller 24 can include or be associated with any suitable number of individual microprocessors, power supplies, storage devices, interface cards, auto flight systems, flight management computers, and other standard components. For example, the controller 24 can include memory 26, the memory 26 can include random access memory (RAM), read-only memory (ROM), flash memory, or one or more different types of portable electronic memory, such as discs, DVDs, CD-ROMs, etc., or any suitable combination of these types of memory. The controller 24 can also include one or more processors 28, which can be running any suitable programs. The controller 24 can include or cooperate with any number of software programs or instructions designed to carry out the various methods, process tasks, calculations, and control/display functions necessary for operation of the aircraft 10. Further still, each of the system(s) 20 or component(s) 22 can include their own processor. The system(s) 20 or component(s) 22 can be wired or wireless communicatively coupled to the controller(s) 24.

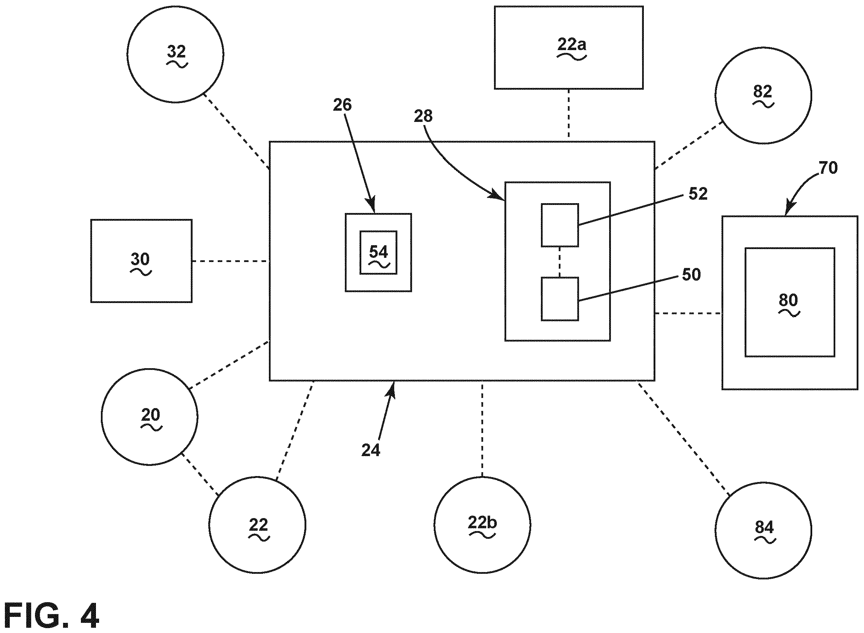

The controller 24 can include a computer searchable database 54 (FIG. 4) of information or can be operably coupled to a database 54 of information. For example, such a database 54 can be stored in the memory 26, or an alternative computer or controller. It will be understood that the database 54 can be any suitable database 54, including a single database 54 having multiple sets of data, multiple discrete databases linked together, or even a simple table of data.

It is contemplated that the database 54 can be located off the aircraft 10 at a location such as airline or flight operations department control (not shown) or another location and that the controller 24 can be operably coupled to a communication module 32 over which the database 54 information can be provided to the controller 24. This database 54 can include pilot preferential data inputted via electronic means i.e. flash memory, internet, WiFi, local area network (LAN), satellite communication (SatComm) or other electronic delivery means.

The database 54 can include regulatory requirements e.g., Federal Aviation Administration (FAA), airline company or aircraft operator, operations manual or specifications requirements and also pilot preferences, best practices and pilot optioned best practices for start-up, taxi, takeoff, departure procedures, climb, cruise, descent, arrival procedures, approach procedure selection, landing, reverse thrust usage, and taxi techniques. The database 54 can also include runway data, navigational information, aircraft performance data, engine performance data, runway surface conditions, current outside weather conditions, etc.

Performance criteria for departure and for arrival can be derived by the controller 24 from the database 54 dependent upon the airplane configuration: flaps, engine bleed air, missing or inoperative equipment, wheels, tires, brakes, reverse thrust, runway parameters, and condition of the runway environment, weight, etc. Alternatively, performance criteria can be uplinked by the Airline Operations Control (AOC) or manually figured by the crew and entered into the FMS 30. Further, approach and landing field length requirements may be specified in the database 54 and may define the minimum field length and minimum margins for performance.

Furthermore, the aircraft 10 can be equipped with various navigational tools including an inertial reference system (IRS) and/or global positioning system (GPS), which can also be operably coupled with the controller 24. The IRS can be an on-board system that senses the movement of the aircraft 10, and continuously calculates the aircraft's position, speed etc. The GPS can be installed on the aircraft 10 and gives position reports over a satellite and/or cellular network including a report of information such as speed, bearing, and altitude.

A flight management system (FMS) 30 can be in communication with or coupled to the controller 24. The FMS 30 can be one exemplary system 20. The FMS 30 can be used to provide automated or manual operation of at least a portion of the aircraft 10. It is contemplated that any number of the system(s) 20 or component(s) 22 can communicate directly or indirectly with the FMS 30 through a wired or wireless link.

Additionally, the controller 24 can be operably coupled to the communication module 32. The communication module 32 can be any variety of communication mechanism capable of wirelessly linking with other systems and devices and can include, but is not limited to, packet radio, satellite uplink, Wireless Fidelity (WiFi), WiMax, Bluetooth, ZigBee, 3G wireless signal, code division multiple access (CDMA) wireless signal, global system for mobile communication (GSM), 4G wireless signal, long term evolution (LTE) signal, Ethernet, or any combinations thereof. It will also be understood that the particular type or mode of wireless communication of the communication module 32 is not critical to embodiments of this invention, and later-developed wireless networks are certainly contemplated as within the scope of embodiments of the invention. Further, the communication module 32 can include one or more radios including voice, aircraft communications addressing and reporting system (ACARS) analog, ACARS-digital, satellite communication (SATCOM), Cellular, etc. The communication module 32 can allow for communication with ground controllers or airlines operations center.

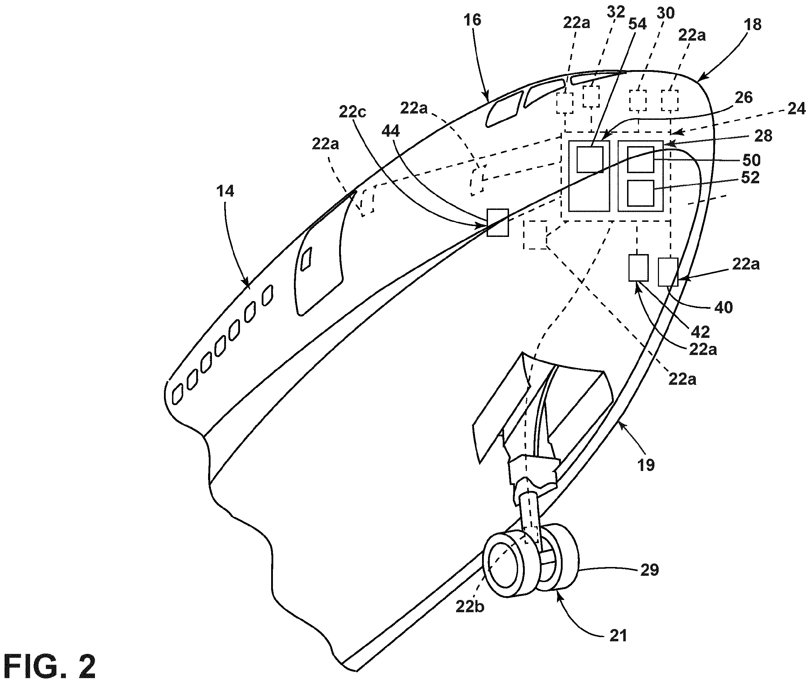

FIG. 2 illustrates a portion of the aircraft 10 from the perspective of the lower portion 19. The set of airspeed sensors 22a can include, but are not limited to, a captain's probe 40, a standby probe 42, and a first officer's probe 44. It is contemplated that the set of airspeed sensors 22a can include any number of airspeed sensors. The captain's probe 40, the standby probe 42, and the first officer's probe 44 are illustrated by way of non-limiting example at locations near the nose 18 although this need not be the case. It is further contemplated that the set of airspeed sensors 22a could be located on other portions of aircraft 10 and other alternative locations have been illustrated in phantom.

The set of airspeed sensors 22a can communicate with the controller 24, FMS 30, or other system 20 to provide air data; for the sake of clarity the remainder of this description will discuss the output from the set of airspeed sensors 22a being provided to the controller 24. A processing module 50 for automatically receiving real-time airspeed data can be included or communicatively connected to the processor 28 of the controller 24. Additionally, the wheel speed sensor 22b can communicate with the controller 24 to provide speed data, also received by the processing module 50. A countermeasure module 52 can receive an output from the processing module 50, where the output is based on at least the real-time airspeed data and the speed data.

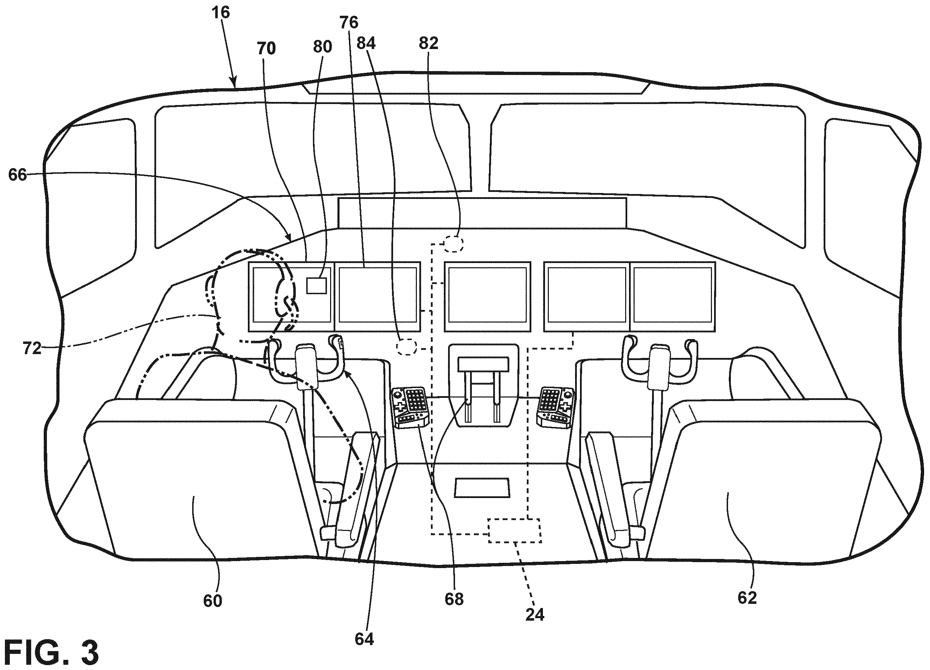

FIG. 3 illustrates a portion of the cockpit 16 of the aircraft 10 including a pilot seat 60, a co-pilot seat 62, an aircraft control yoke 64, a flight deck 66 having a number of flight controls 68, and at least one flight display 70. A pilot 72, sitting in the pilot seat 60 facing the flight deck 66, can utilize the yoke 64 as well as the other flight controls 68 to maneuver the aircraft 10. It is contemplated that a control stick or other control device can alternatively be installed in the cockpit 16 instead of the yoke 64 and that such a control stick can be used to maneuver the aircraft 10. For purposes of this description, the term "yoke" is used to refer to all types of control devices.

The at least one flight display 70 can include either primary flight displays or multi-function displays and can display a wide range of aircraft, flight, navigation, and other information used in the operation and control of the aircraft 10. The flight displays 70 can be capable of displaying color graphics and text to a user. The flight displays 70 can be laid out in any manner including having fewer or more displays and need not be coplanar or the same size. A touch screen display or touch screen surface 76 can be included in the flight displays 70 and can be used by one or more flight crew members, including the pilot and co-pilot, to interact with the systems of the aircraft 10.

The flight displays 70 can include an indicator 80. It is contemplated that the indicator 80 can display situational awareness information of the aircraft 10 including at least a V1 speed indicator. The term "VI" is defined as the speed beyond which the takeoff of the aircraft 10 should no longer be aborted. Prior to the speed V1 the pilot 72, co-pilot, or the FMS 30 can abort takeoff and apply all the necessary means to bring the aircraft 10 to a halt. If a takeoff is aborted after V1 the aircraft 10 will very likely overrun the runway before stopping.

Additionally or alternatively, a visual indicator 82 or an aural indicator 84 can be included in the flight deck 66. The visual indicator 82 can be a light, illuminated button, or any other device that can become or is visible to at least the pilot 72 or co-pilot. The aural indicator 84 can be a speaker or any other known device to create an audible sound that can be detected by at least the pilot 72 or co-pilot.

The controller 24 can be operably coupled to components of the aircraft 10 including the flight displays 70, the indicator 80, the visual indicator 82, or the aural indicator 84 communicating situational awareness information from the controller 24 to, for example, the pilot 72. The memory 26 or the processor 28 of the controller 24 can run any suitable programs that implement a graphical display, graphical user interface (GUI) or other operating system on the fight displays 70.

FIG. 4 further schematically illustrates a non-limiting example of data communication within the aircraft of FIG. 1. By way of non-limiting example, information from the database 54 or memory 26 can be communicated to the processor 28. The processor 28 can include the processing module 50 and the countermeasure module 52. Alternatively, the controller 24 can operably communicate with the processing module 50 and the countermeasure module 52. Regardless of the configuration, the processing module 50 can be configured to receive or retrieve at least one of aircraft configuration information, performance data, runway information, or weather data. The processing module 50 can receive or obtain information or data from the set of airspeed sensors 22a, the wheel speed sensor 22b, the FMS 30, the communication module 32, the system(s) 20, or the component(s) 22. The processing module 50 can provide an output to the countermeasure module 52 based on the obtained information, data, or determinations made by the processing module 50 related thereto.

The countermeasure module 52 can, based on the output from the processing module 50, communicate with at least one of the FMS 30, the indicator 80 on the flight displays 70, the visual indicator 82, or the aural indicator 84.

It is contemplated that multiple configurations of the components illustrated in FIG. 4 are possible. It is further contemplated that the aspects of the disclosure can be executed using more than one controller or processor.

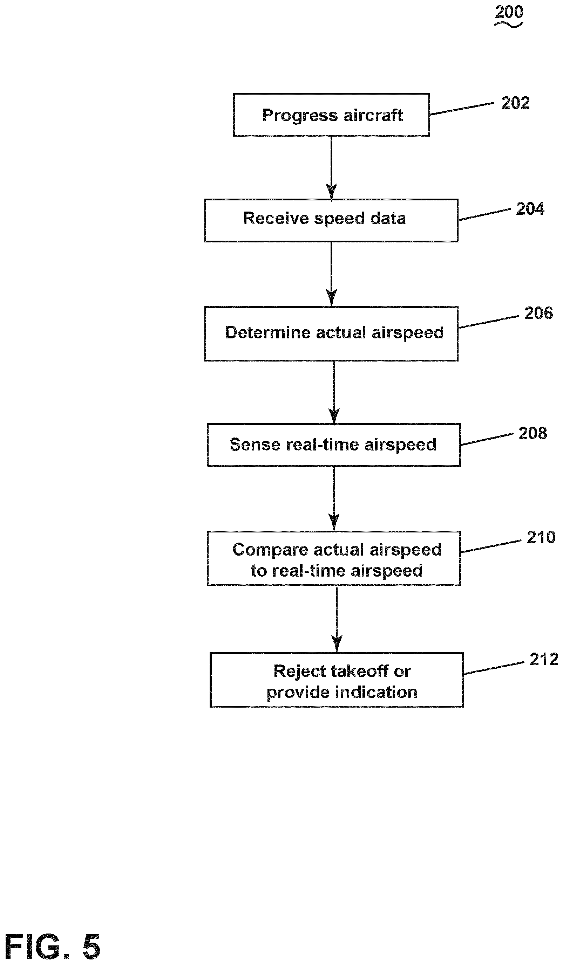

FIG. 5 illustrates a method 200 for establishing air data. At 202, the aircraft 10 is operated to progress along a runway during a takeoff operation. Consider, by way of non-limiting example, the aircraft 10 progressing down the runway at a speed greater than zero but less than V1. The speed of progression can increase in a linear fashion but need not be.

At 204, the processing module 50 receives speed data from at least one sensor other than the set of airspeed sensors 22a. For example, the speed data can include the speed data related to the at least one wheel 29 of the at least one landing gear assembly 21 as the aircraft 10 is progressing at 202. The receiving speed data, at 204, can include sensing the speed data from the wheel speed sensor 22b.

At 206, the actual airspeed of the aircraft 10 as the aircraft 10 is progressing is determined based on at least the speed data. Determining the actual airspeed of the aircraft 10 can include calculating the actual airspeed based on the speed data received at 204. The actual airspeed of the aircraft 10 can be determined, for example, by the processing module 50.

It is contemplated that the calculation of determination of the actual airspeed at 206 can include a variety of information in addition to the speed data received at 204. By way of non-limiting example, the processing module 50 can further receive weather data. Weather data can include, but is not limited to, wind data, runway surface conditions, or current outside weather conditions. Optionally, at 206 the actual airspeed of the aircraft 10 can be determined by the processing module 50 based on the speed data and the weather data. It is contemplated that calculating the actual airspeed of the aircraft 10 can be further based on at least one of headwind or tailwind information. In this manner, if a tailwind is pushing the aircraft 10 causing it to progress faster down the runway, it can be determined at 206 that the airspeed is lower than the ground speed; adjusting the actual airspeed of the aircraft 10 value accordingly.

It is further contemplated that the actual airspeed of the aircraft 10 can be further based on the inertial reference system (IRS), the global positioning system (GPS), or a radar altimeter with Doppler function.

At 208, the real-time airspeed data is sensed from the set of airspeed sensors 22a as the aircraft is progressing. Again, the set of airspeed sensors 22a are operably coupled to the processing module 50 to communicate the real-time airspeed data for the aircraft 10 from the set of airspeed sensors 22a to the processing module 50. The sensing, at 208, can include receiving output from multiple of the set of airspeed sensors 22a including, but not limited to, the captain's probe 40, the standby probe 42, and the first officer's probe 44.

At 210, while the aircraft 10 is progressing, the actual airspeed as determined, at 206, is compared to the real-time airspeed data, as sensed at 208. The comparing can include that the processing module 50 can compare the actual airspeed to the real-time airspeed data and provide an output based on the comparison to the countermeasure module 52. More specifically, the actual airspeed as determined at 206 can be compared to each of the sensed real-time airspeeds from the captain's probe 40, the standby probe 42, and the first officer's probe 44.

At 212, based on the comparing, at least one of automatically rejecting takeoff or automatically providing an indication to a pilot 72 of the aircraft 10 when the comparing satisfies a predetermined threshold. The countermeasure module 52 can initiate the automatic rejection of takeoff or the automatic indication to the pilot 72 case on the output provided by the processing module 50. The comparing at 212 can be completed while the aircraft 10 is progressing down the runway at a speed less than VI, which is the speed beyond which the takeoff of the aircraft 10 should no longer be aborted. By way of non-limiting example, the comparing at 212 can occur at a predetermined speed or length of time from release of the brake. It is contemplated that the predetermined speed can be a selected value or predetermined percentage of the speed V1. It is further contemplated that the comparing at 212 can occur more than one time prior to V1.

Prior to the speed V1 the pilot 72, co-pilot, or the FMS 30 can abort takeoff and apply all the necessary means to bring the aircraft 10 to a halt. V1 can be calculated using, for example, factors such as the weight of the aircraft 10, the length of a runway, a wing flap setting, an engine thrust used and the runway surface conditions. Typically, V1 is determined by the pilot 72 before takeoff. Aborting a takeoff after V1 is strongly discouraged V1.

It is contemplated that the countermeasure module 52 can provide the pilot 72 with information indicating consistency between the determined actual airspeed at 206 and the real-time airspeed data at 208. For example, the indicator 80 can illustrate that the determined actual airspeed at 206 and the real-time airspeed data at 208 are within or less than the predetermined threshold.

Alternatively, by way of non-limiting example, a countermeasure initiated by the countermeasure module 52 can be that the takeoff is automatically rejected at 212 when the comparing at 210 indicates that at least two of the set of airspeed sensors 22a have deviations above the predetermined threshold. That is, the takeoff can be automatically rejected when the comparing indicates that two or more of the captain's probe 40, the standby probe 42, and the first officer's probe 44 deviate from the actual determined airspeed from 206. It is contemplated that the predetermined threshold can be a numerical difference between the determined actual airspeed at 206 and the real-time airspeed data at 208. By way of non-limiting example, if the predetermined threshold was 5 knots, then a difference between determined actual airspeed at 206 and the real-time airspeed data at 208 that was 5 knots or greater can be considered above or outside the predetermined threshold. It is further contemplated that the predetermined threshold can be a percent discrepancy between the determined actual airspeed at 206 and the real-time airspeed data at 208. By way of non-limiting example, if the predetermined threshold was 10 percent, then a percent discrepancy between the determined actual airspeed at 206 and the real-time airspeed data at 208 that was 10 percent or greater can be considered above or outside the predetermined threshold. It is yet further contemplated that the predetermined threshold can vary from one aircraft to another. For example, the predetermined threshold can be established based on the aircraft model or probes used to obtain real-time airspeed data.

The automatic rejection of takeoff can include, but is not limited to, the countermeasure module 52 automatically repositioning flaps, deploying spoilers, administering brakes, throttling down, or activating reverse thrust. Additionally, automatic rejection of takeoff can include at least one or more of the system(s) 20. By way of non-limiting example, the real-time airspeed data gathered from the captain's probe 40, the standby probe 42, or the first officer's probe 44 for comparison to the actual airspeed determined from at least the wheel speed sensor 22b. If the difference between the real-time airspeed data gathered from the captain's probe 40 the standby probe 42, or the first officer's probe 44 and the determined actual airspeed is too great, the countermeasure module 52 can initiate a countermeasure.

By way of further non-liming example, consider the real-time airspeed data from the captain's probe 40 to be 17 knots less than the actual airspeed and the standby probe 42 difference to be 18 knots less than the actual airspeed. However, the first officer's probe 44 provides real-time airspeed data that is only 2 knots less. The countermeasure module 52 can provide automatic rejection of takeoff based on the differences and inconsistencies of at least the captain's probe 40 and the standby probe 42. It is contemplated that the rejection of takeoff by the countermeasure module 52 can be based on the number of probes providing inconsistent data above a predetermined threshold.

Additionally or alternatively to the rejection of takeoff, the countermeasure can provide an indication within the cockpit 16 of the aircraft 10. By way of non-limiting example, within the cockpit 16 of the aircraft 10, the indicator 80 on the flight displays 70, the visual indicator 82, or the aural indicator 84 can be used to communicate unacceptable airspeed data. Additionally or alternatively, the indicator 80 on the flight displays 70, the visual indicator 82, or the aural indicator 84 can be used to indicate that one or more of the set of airspeed sensors 22a has a deviation above the predetermined threshold.

By way of non-limiting example, when deviations are detected between the real-time airspeed data and the actual airspeed, the indicator 80 on the flight displays 70 can be activated and provide, via the countermeasure module 52, the real-time airspeed data for each probe, such as the captain's probe 40, the standby probe 42, first officer's probe 44, and the actual airspeed calculated from the wheel speed sensor 22b. The indicator 80 can also illustrate the difference between each of the captain's probe 40, the standby probe 42, first officer's probe 44, real-time airspeed data and the actual airspeed.

Consider the above non-limiting example, where the real-time airspeed data from the captain's probe 40 is 17 knots less, the standby probe 42 is 18 knots less, and the first officer's probe 44 is only 2 knots less than the actual airspeed. The indicator 80 could show both the differences from the actual airspeed and the values can include the captain's probe's 40 real-time data of 43, the standby probe's 42 real-time data of 42 knots, and first officer's real-time data of 60 knots. Further the indicator 80 can provide the actual airspeed at 62 knots. When the indication is provided to the pilot 72, the pilot 72 is altered to the undesirable air data and can make a more informed decision regarding takeoff prior to V1 and reject takeoff if necessary.

Aspects of the disclosure also provide for a method of operating an aircraft. The method of operating an aircraft includes progressing the aircraft 10 along a runway, sensing real-time airspeed data from the set of airspeed sensors 22a as the aircraft 10 is progressing, determining actual airspeed, comparing the actual airspeed to real-time airspeed data and automatically initiating a countermeasure, with at least one system onboard the aircraft 10, when the comparing satisfies a predetermined threshold.

The sequence depicted is for illustrative purposes only and is not meant to limit the method 200 in any way as it is understood that the portions of the method can proceed in a different logical order, additional or intervening portions can be included, or described portions of the method can be divided into multiple portions, or described portions of the method can be omitted without detracting from the described method.

Aspects of the present disclosure provide a comparison between the actual airspeed of an aircraft as calculated in at least one other manner un-related to an airspeed sensor and real-time airspeed data as determined by at least one airspeed sensor to ensure the availability of air data and accuracy thereof. A technical effect of aspects of the present disclosure compare the actual airspeed of an aircraft to the real-time airspeed data of the aircraft and can reject takeoff or provide an indication to the pilot if the comparison is outside a predetermined threshold. A benefit that can be realized when compared to the current method is the automatic evaluation of the availability of the air data before takeoff. Traditionally, checking air data availability is left to the pilot or to an in-flight system. Checking air data availability before takeoff allows issues to be addressed before the aircraft leaves the ground.

To the extent not already described, the different features and structures of the various embodiments can be used in combination with each other as desired. That one feature is not illustrated in all of the embodiments is not meant to be construed that it cannot be, but is done for brevity of description. Thus, the various features of the different aspects can be mixed and matched as desired to form new aspects, whether or not those are expressly described. All combinations or permutations of features described herein are covered by this disclosure.

Further aspects of the invention are provided by the subject matter of the following clauses:
1. A method of establishing air data, the method comprising progressing an aircraft along a runway, receiving speed data related to at least one wheel of at least one landing gear assembly as the aircraft is progressing, determining actual airspeed of the aircraft based on at least the speed data, sensing real-time airspeed data from a set of airspeed sensors as the aircraft is progressing, comparing the actual airspeed to real-time airspeed data, and at least one of automatically rejecting takeoff or automatically providing an indication to a pilot of the aircraft when the comparing satisfies a predetermined threshold.
2. The method of any preceding clause, further comprising receiving weather data and wherein the determining the actual airspeed of the aircraft is based on the speed data and the weather data.
3. The method of any preceding clause wherein the weather data includes at least one of wind data, runway surface conditions, and current outside weather conditions.
4. The method of any preceding clause wherein when the comparing indicates at least two of the set of airspeed sensors have deviations above a predetermined threshold and the takeoff is automatically rejected.
5. The method of any preceding clause wherein when the comparing indicates one of the set of airspeed sensors has a deviation above a predetermined threshold at least one of a visual or aural indication is provided to the pilot.
6. A method of operating an aircraft, the method comprising progressing an aircraft along a runway, sensing real-time airspeed data from a set of airspeed sensors as the aircraft is progressing, determining actual airspeed, comparing the actual airspeed to real-time airspeed data, and automatically initiating a countermeasure, with at least one system onboard the aircraft, when the comparing satisfies a predetermined threshold.
7. The method of any preceding clause wherein the determining the actual airspeed includes sensing an output from at least one sensor other than an airspeed sensor of the aircraft and calculating the actual airspeed based thereon.
8. The method of any preceding clause wherein the at least one sensor is a wheel speed sensor.
9. The method of any preceding clause wherein the calculating is further based on at least one of headwind or tailwind information.
10. The method of any preceding clause wherein the calculating is further based on at least one of an inertial reference system, a global positioning system, or a radar altimeter.
11. The method of any preceding clause wherein the countermeasure includes providing an indication within a cockpit of the aircraft of unacceptable airspeed data.
12. The method of any preceding clause, further comprising displaying on a flight display situational awareness information of the aircraft including at least a V1 speed indicator.
13. The method of any preceding clause wherein the countermeasure includes automatically rejecting takeoff when the comparing satisfies a predetermined threshold.
14. The method of any preceding clause wherein when the comparing indicates at least two of the set of airspeed sensors have deviations above a predetermined threshold the countermeasure includes that the takeoff of the aircraft is automatically rejected.
15. The method of any preceding clause wherein the countermeasure includes automatically rejecting takeoff when the comparing satisfies a predetermined threshold.
16. The method of any preceding clause wherein when the comparing indicates at least two of the set of airspeed sensors have deviations above a predetermined threshold the countermeasure includes that the takeoff of the aircraft is automatically rejected.
17. An aircraft, comprising a set of airspeed sensors, at least one sensor other than an airspeed sensor operably coupled to at least one component or system of the aircraft, a countermeasure module operably coupled to at least one of a flight management system or display within the aircraft, and a processing module operably coupled to the set of airspeed sensors and the at least one sensor the processing module configured to receive information from the set of airspeed sensors and the at least one sensor as the aircraft is progressing along a runway, the processing module configured to determine an actual airspeed of the aircraft based on the received information from the at least one sensor and configured to compare the actual airspeed to the received information from the set of airspeed sensors, when the comparing satisfies a predetermined threshold the processing module is configured to provide an output to the countermeasure module.
18. The aircraft of any preceding clause wherein the countermeasure module includes at least one indicator in a cockpit of the aircraft and wherein the at least one indicator is configured to provide a Go/No-Go warning.
19. The aircraft of any preceding clause wherein the processing module is configured to receive at least one of aircraft configuration information, performance data, runway information, and weather data.
20. The aircraft of any preceding clause wherein the at least one other sensor is a wheel speed sensor and the processing module is further configured to determine the actual airspeed based on the wheel speed sensor and weather data.

This written description uses examples to disclose the invention, including the best mode, and also to enable any person skilled in the art to practice the invention, including making and using any devices or systems and performing any incorporated methods. The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method (200) of operating an aircraft (10), the method (200) comprising:
progressing (202) an aircraft (10) along a runway;
sensing real-time (208) airspeed data from a set of airspeed sensors (22a) as the aircraft (10) is progressing;
determining (204, 206) actual airspeed;
comparing (210) the actual airspeed to real-time airspeed data; and
automatically initiating a countermeasure (212), with at least one system (20) onboard the aircraft (10), when the comparing (210) satisfies a predetermined threshold.

2. The method (200) of claim 1 wherein the determining (206) the actual airspeed includes sensing an output from at least one sensor (22, 22b) other than an airspeed sensor (22a) of the aircraft (10) and calculating the actual airspeed based thereon.

3. The method (200) of claim 2 wherein the at least one sensor (22) is a wheel speed sensor (22b).

4. The method (200) of claim 2 or 3 wherein the calculating is further based on at least one of headwind or tailwind information.

5. The method (200) of any of claims 2 to 4 wherein the calculating is further based on at least one of an inertial reference system, a global positioning system, or a radar altimeter.

6. The method (200) of any one of claims 1-5 wherein the countermeasure includes providing an indication (80, 82, 84) within a cockpit (16) of the aircraft (10) of unacceptable airspeed data.

7. The method (200) of claim 6, further comprising displaying on a flight display (70, 80) situational awareness information of the aircraft (10) including at least a V1 speed indicator.

8. The method (200) of claim 6 or 7 wherein the countermeasure includes automatically rejecting takeoff when the comparing satisfies a predetermined threshold.

9. The method (200) of claim 8, wherein when the comparing indicates at least two of the set of airspeed sensors (22a) have deviations above a predetermined threshold the countermeasure includes that the takeoff of the aircraft (10) is automatically rejected.

10. The method (200) of any one of claims 1-9 wherein the countermeasure includes automatically rejecting takeoff when the comparing satisfies a predetermined threshold.

11. An aircraft (10), compri sing:
a set of airspeed sensors (22a);
at least one sensor (22, 22b) other than an airspeed sensor (22a) operably coupled to at least one component or system of the aircraft (10);
a countermeasure module (52) operably coupled to at least one of a flight management system or display within the aircraft (10); and
a processing module (50) operably coupled to the set of airspeed sensors and the at least one sensor the processing module (50) configured to receive information from the set of airspeed sensors and the at least one sensor as the aircraft (10) is progressing along a runway, the processing module (50) configured to determine an actual airspeed of the aircraft (10) based on the received information from the at least one sensor and configured to compare the actual airspeed to the received information from the set of airspeed sensors, when the comparing satisfies a predetermined threshold the processing module (50) is configured to provide an output to the countermeasure module (52).

12. The aircraft (10) of claim 11 wherein the countermeasure module (52) includes at least one indicator (80) in a cockpit of the aircraft (10) and wherein the at least one indicator (80) is configured to provide a Go/No-Go warning.

13. The aircraft (10) of claim 11 or 12 wherein the processing module (50) is configured to receive at least one of aircraft (10) configuration information, performance data, runway information, and weather data.

14. The aircraft (10) of any of claims 11 to 13 wherein the at least one other sensor (22, 22b) is a wheel speed sensor and the processing module (50) is further configured to determine the actual airspeed based on the wheel speed sensor and weather data.
